# EUROPÄISCHE PATENTANMELDUNG

(11) **EP 1 302 826 A1**
(43) Veröffentlichungstag der Anmeldung: **16.04.2003**
(21) Anmeldenummer: 02021690.9
(22) Anmeldetag: 27.09.2002
(51) Int. Cl.: G05B 19/05, G05B 9/03

(54) **Synchronisationsverfahren für ein hochverfügbares Automatisierungssystem**

(30) Priorität: 27.09.2001 DE 10147763
(71) Anmelder: SIEMENS AKTIENGESELLSCHAFT, 80333 München (DE)
(72) Erfinder: Harms, Fritz, 75031 Eppingen (DE)

(57) **Zusammenfassung**

Die Erfindung betrifft ein Synchronisationsverfahren für ein redundant aus mindestens zwei Teilsystemen (1,2) aufgebautes Automatisierungssystem, bei dem die mindestens zwei Teilsysteme jeweils mindestens einen Prozessor (P₁, P₂) und mindestens je einen Ereignisspeicher (S₁, S₂) enthalten, die mindestens zwei Teilsysteme über Kommunikationsleitungen (K₁, K₂) miteinander gekoppelt sind und zur Steuerung eines Prozesses in beiden Teilsystemen gleiche Tasks (T_{N}) ausgeführt werden. Des Weiteren betrifft die Erfindung ein Automatisierungssystem. Um statt eines speziellen Betriebssystems ein Standard-Betriebssystem zur Steuerung eines hochverfügbaren Prozesses einsetzen zu können, wird vorgeschlagen, bei jedem Taskwechsel eine vom Anwender programmierte, zur Bereitstellung der Hochverfügbarkeit notwendige Funktion aufzurufen und extern auftretende einkanalige Ereignisdaten (D₁, D₂) vor der Zuführung der Teilsysteme zu duplizieren, so dass beide Teilsysteme immer mit den gleichen Daten versorgt werden und bei Ausfall eines Teilsystems, das andere, nicht ausgefallene Teilsystem den Prozess ohne Verzögerung sicher weiter steuern kann.

## Beschreibung

Die Erfindung betrifft ein Synchronisationsverfahren für ein redundant aus mindestens zwei Teilsystemen aufgebautes Automatisierungssystem, bei dem die mindestens zwei Teilsysteme jeweils mindestens einen Prozessor und mindestens je einen Ereignisspeicher enthalten, die mindestens zwei Teilsysteme über Kommunikationsleitungen miteinander gekoppelt sind und zur Steuerung eines Prozesses in beiden Teilsystemen gleiche Tasks ausgeführt werden. Des Weiteren betrifft die Erfindung ein Automatisierungssystem.

Synchronisationsverfahren für Automatisierungssysteme sind allgemein bekannt. Ein Automatisierungssystem kann taktsynchron oder ereignissynchron arbeiten.

Aus der EP 0 497 147 A2 ist ein Verfahren zum Betreiben eines redundant aus zwei Teilsystemen aufgebauten Automatisierungssystems bekannt, bei dem sich spätestens nach Ablauf einer vom Benutzer vorwählbaren Zeit die Teilsysteme synchronisieren. Treten in dem von den Teilsystemen abgearbeiteten Programmen Sprünge auf, muss vor dem Sprungbefehl eine Synchronisation durchgeführt werden, da durch den Sprung die "Vorgeschichte" verlorengeht, das jeweilige Teilsystem also nicht mehr weiß, wann die letzte Synchronisation durchgeführt wurde. Das Verfahren gemäß der EP 0 497 147 A2 ist daher insofern noch nicht optimal, als unnötig viel Zeit für die Synchronisation verbraucht wurde.

Von Ereignissynchronität spricht man, wenn beiden Teilsystemen alle externen Ereignisse synchron zugeführt werden und bearbeitet werden, wobei auf den beiden Teilsystemen immer das gleiche Programm bearbeitet wird, wodurch beim Ausfall eines Teilsystems gewährleistet ist, dass ein Teilsystem den Prozess ohne Unterbrechung weiterbearbeiten kann.

Um eine Ereignissynchronität zu ermöglichen, wird bei bisher bekannten Systemen dazu ein speziell für diese Anforderungen entwickeltes Betriebssystem verwendet. Die Synchronisationsmechanismen sind dabei direkt im Betriebssystem implementiert.

Dazu müssen im Betriebssystem einkanalige Zwitter und zweikanalige Tasks programmiert werden. Die Tasks stellen Aufgabenfolgen von Maschinenbefehlen dar, die von den Prozessoren abgearbeitet werden. Dabei wird in einem Taskablaufplan festgelegt, wann welche Task ausgeführt wird. Einkanalige Tasks können durch externe einseitige Ereignisse asynchron auf beiden Teilsystemen gestartet werden. Zweikanalige Tasks können nur durch zweiseitig oder zweikanalig auftretende Ereignisse gestartet werden. Dazu müssen diese zweikanalig auftretenden Ereignisse bei beiden Teilsystemen gleichzeitig eintreten. Zwitter-Tasks können auf beiden Teilsystemen, synchron und asynchron gestartet werden. In den Zwitter-Tasks muss vom Anwender programmiert werden, dass einkanalig auftretende Ereignisse derart dupliziert werden, dass sie beiden Teilsystemen gleichzeitig zugeführt werden und demzufolge zweikanalig abgearbeitet werden können. Dazu muss bisher vom Anwender in den Zwitter-Tasks programmiert werden, dass externe einkanalige Ereignisse dupliziert werden.

Extern auftretende Ereignisse werden wenn sie nur einseitig, d. h. bei einem Teilsystem auftreten, in den Zwitter-Tasks dupliziert und synchron auf beiden Teilsystemen bearbeitet. Zweiseitige externe Ereignisse werden synchron auf beiden Teilsystemen zum Ablauf gebracht.

Hochverfügbare Automatisierungssysteme werden für Prozesssteuerungen beispielsweise in der chemischen Industrie eingesetzt, aber auch in der verarbeitenden Industrie und im Maschinenbau. Sie sind insbesondere dort notwendig, wo ein Stillstand oder Abruch der Produktion sehr teuer oder für die beteiligten Personen oder die Umwelt gefährlich sein könnte.

Die Aufgabe der vorliegenden Erfindung besteht folglich darin, ein Synchronisationsverfahren mit minimalem Aufwand für ein aus mindestens zwei Teilsystemen aufgebautes Automatisierungssystem anzugeben. Weiterhin sollen manuelle Eingriffe in die Steuerung des Prozesses, durch die Fehler verursacht werden könnten, vermieden werden und die Notwendigkeit entfallen, für die Synchronisierung spezielle Betriebssysteme zu programmieren, so dass Standard-Betriebssysteme, die nicht speziell für den ereignissynchronen Betrieb von zwei Teilsystemen ausgelegt sind, verwendet werden können.

Die Aufgabe wird durch ein Synchronisationsverfahren für ein redundant aus mindestens zwei Teilsystemen aufgebautes Automatisierungssystem gelöst, bei dem die mindestens zwei Teilsysteme jeweils mindestens einen Prozessor und mindestens je einen Ereignisspeicher enthalten, die mindestens zwei Teilsysteme über Kommunikationsleitungen miteinander gekoppelt sind und zur Steuerung eines Prozesses in beiden Teilsystemen gleiche Tasks ausgeführt werden, und bei einem Taskwechsel in wenigstens einem Teilsystem und dem Vorliegen von externen Ereignisdaten in den Ereignisspeichern, die Ereignisdaten synchronisiert in jedes Teilsystem eingebracht werden.

Die zwei Teilsysteme enthalten jeweils mindestens einen Prozessor denen jeweils wenigstens ein Ereignisspeicher zugeordnet ist. Über Kommunikationsleitungen werden Informationen zwischen den beiden Teilsystemen ausgetauscht. In jedem Teilsystem ist ein Taskablaufplan programmiert, der den zeitlichen Ablauf der zu startenden Task steuert. Wenn eine Task zur Bearbeitung aufgerufen wird, wird sie mit vorliegenden Informationen oder Daten versorgt. Erfindungsgemäß wird es bei einem Standard-Betriebssystem ermöglicht, bei jedem Taskwechsel eine vom Anwender programmierte Task oder Funktion in den Taskablauf einzufügen. Bisher wurden extra Zwitter-Tasks programmiert, bei denen auf Taskebene extern vorliegende Ereignisse dupliziert wurden und synchron zur Ausführung gebracht wurden. Dieses Betriebssystem ist speziell für die Steuerung von Prozessen in hochverfügbaren Automatisierungssystemen programmiert worden.

Dadurch entsteht der Nachteil, dass dieses Betriebssystem nur in derartigen Systemen eingesetzt werden konnte und zu seiner Wartung spezielle Kenntnisse notwendig waren, so dass die Wartung und Pflege von derartigen Systemen aufwendig und teuer waren.

In einer bevorzugten Weiterentwicklung der Erfindung wird nach jedem Taskwechsel wenigstens eine Funktion in den Teilsystemen aufgerufen, die bei Vorliegen von externen Ereignisdaten in den Ereignisspeichern diese Ereignisdaten synchron in die beide Teilsysteme einbringt.

Mittels dem erfindungsgemäßen Synchronisationsverfahren wird es ermöglicht, bei jedem Taskwechsel in einem Teilsystem eine vom Anwender speziell für die Bereitstellung einer Hochverfügbarkeit von ereignissynchronen Systemen programmierte Funktion in den Taskablauf einzubinden, ohne dass dazu ein spezielles Betriebssystem erforderlich ist. Dadurch können Standard-Betriebssysteme verwendet werden, so dass nur einige für die Bereitstellung der Hochverfügbarkeit notwendige Funktionen programmiert werden müssen, die dann bei jedem Taskwechsel aufrufbar sind und bei Vorliegen der notwendigen Ereignisdaten diese auf beiden Teilsystemen vorliegende Daten synchron in die Teilsysteme einbringen.

Dazu ist es vorteilhaft, wenn externe Ereignisdaten, die nur bei einem Teilsystem auftreten, dupliziert werden, bevor sie den Teilsystemen zugeführt werden.

Außerdem werden einkanalig auftretende externe Ereignisdaten nach einer Duplizierung in den Ereignisspeichern der Teilsysteme abgespeichert.

Bspw. kann dazu das Standard-Betriebssystem VxWorks™ von WindRiver benutzt werden. Dieses Betriebssystem ist nicht speziell für hochverfügbare System entwickelt worden und bietet durch die als Task-Switch-Hook bezeichnete Funktionalität die Möglichkeit, bei jedem Taskwechsel vom Anwender geschriebene Funktionen in den Taskablaufplan einzubinden. Dadurch kann die eingebundene Funktion bei jedem Taskwechsel aufgerufen werden. In der Funktion werden zweikanalig vorhandene Ereignisse, die in den Ereignisspeichern liegen, synchron in den Programmablauf eingebracht. Erfindungsgemäß werden externe einkanalig auftretende Ereignisse schon vor der Speicherung bzw. Zuführung zu den Teilsystemen bspw. durch eine Interruptservice-Routine dupliziert und auf beiden Teilsystemen in den Ereignisspeichern bereitgestellt. Zweikanalige Ereignisse werden auf beiden Teilsystemen immer synchron in den Ereignisspeichern bereitgestellt. Da auf beiden Teilsystemen die gleiche Funktion mit den gleichen Ereignisdaten versorgt wird, ist eine redundante Bearbeitung gewährleistet, wodurch ein hochverfügbares System bereitgestellt wird, welches ein unterbrechungsfreies Weiterarbeiten eines Prozesses garantiert, wenn ein Teilsystem ausfällt.

Im Gegensatz zu den bekannten Verfahren, bei denen Zwitter-Tasks programmiert wurden, um einkanalig auftretende Ereignisse zu duplizieren, ist es bei den erfindungsgemäßen hochverfügbaren System nur notwendig, bei einem bestehenden Standard-Betriebssystem eine speziell für die Hochverfügbarkeit geschriebene Funktion bei jedem Taskwechsel aufzurufen und externe Ereignisse vor einer Speicherung in den Teilsystemen zu duplizieren, so dass damit die einkanalig auftretenden Ereignisse synchron in den Taskablauf eingefügt werden und von den Teilsystemen abgearbeitet werden können.

Das spezielle Betriebssystem nach dem Stand der Technik mit den Zwitter-Tasks ließ sich nur für hochverfügbare System einsetzten, das erfindungsgemäße Standard-Betriebssystem lässt sich jedoch auch für viele weitere Anwendungen einsetzen, die nicht hochverfügbar sein müssen.

Die Verwendung der vorhandenen Mechanismen ermöglicht es, ein hochverfügbares System zu bauen, ohne Anpassungen im Betriebssystem vornehmen zu müssen. Da das Duplizieren der externen einkanaligen Ereignisdaten nicht mehr auf dem Tasklevel stattfindet, können Anwenderfunktionen für Standard und hochverfügbare Systeme gleich implementiert werden. Da sich die Hochverfügbarkeitsfunktionalität auf wenige Bestandteile beschränkt, wird die Pflege und Wartung wesentlich vereinfacht. Der Vorteil liegt auch in der Verwendung von Standardmechanismen die ein Betriebssystem, wie bspw. VxWorks bietet. Damit bekommt man wesentlich breitere Einsatzmöglichkeiten, da derartige Standard-Betriebssysteme für eine große Anzahl von Hardwareplattformen verfügbar sind. Ein weiterer Vorteil ist die durchgängig vorhandene Entwicklungsumgebung mit ihren umfangreichen Diagnosemöglichkeiten für Standard-Betriebssysteme.

Die Aufgabe wird auch durch ein Automatisierungssystem gelöst, das redundant aufgebaut ist, mit wenigstens zwei Teilsystemen zur Steuerung eines Prozesses eines Automatisierungssystems, bei der die Teilsysteme wenigstens jeweils einen Prozessor zur Bearbeitung von Tasks und einen Ereignisspeicher zur Speicherung von externen Ereignisdaten aufweisen, bei dem eine Taskumschalteinheit vorgesehen ist, bei jedem Taskwechsel eine Funktion in den Taskablauf einzufügen, wenn an den Teilsystemen externe Ereignisdaten vorliegen, die eine synchrone Abarbeitung erfordern und
eine Dupliziereinheit vorgesehen ist, externe Ereignisdaten, die nur bei einem Teilsystem auftreten, zu duplizieren und dem wenigstens zweiten Teilsystem zu zuführen.

Weitere Vorteile und Einzelheiten ergeben sich aus der nachfolgenden Beschreibung eines Ausführungsbeispiels.

Die Erfindung wird nachstehend ohne Beschränkung des allgemeinen Erfindungsgedankens anhand eines Ausführungsbeispieles unter Bezugnahme auf die Zeichnungen exemplarisch beschrieben, auf die im übrigen bzgl. der Offenbarung aller im Text nicht näher erläuterten erfindungsgemäßen Einzelheiten ausdrücklich verwiesen wird.

Es zeigen:
- Fig. 1:: Aufbau eines hochverfügbaren Automatisierungssystems
- Fig. 2:: Aufbau einer von einem hochverfügbaren Automatisierungssystem gesteuerten Presse

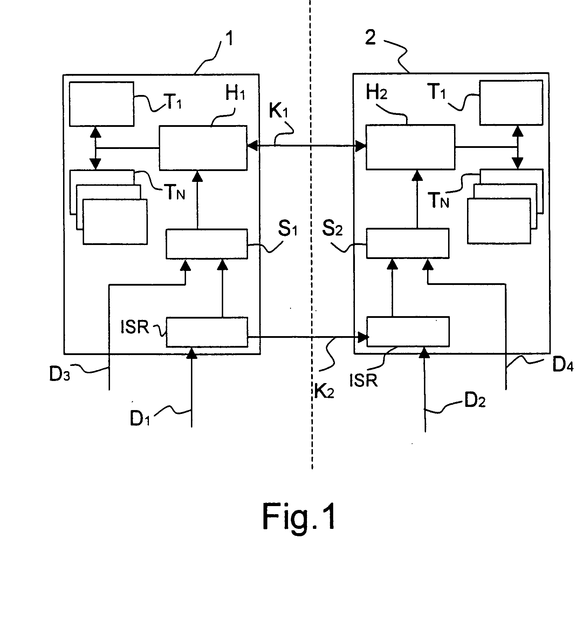

In Figur 1 ist ein hochverfügbares Automatisierungssystem dargestellt. Die beiden Teilsysteme 1 und 2 enthalten jeweils wenigstens einen nicht dargestellten Prozessor P₁ und P₂, die zur Abarbeitung der vom Taskablaufplan aufgerufenen Tasks T notwendig sind. Über Kommunikationsleitungen K₁ und K₂ werden Informationen zwischen den beiden Teilsystemen ausgetauscht. Beide Teilsysteme enthalten jeweils ein Ereignisspeicher S₁ und S₂, die bspw. als Teil eines RAM-Speicher ausgebildet sein können.

Nachdem eine Task T₁ abgearbeitet wurde und ein Taskwechsel stattfindet, wird vom Taskablaufplan eine Funktion aufgerufen, die Ereignisdaten, die in den Ereignisspeicher S₁ und S₂ vorliegen, synchron in den Taskablauf einfügt. Die jeweils vom Taskablaufplan aufgerufene Task T_{N} wird dann mit den entsprechenden Ereignisdaten versorgt und von den Prozessoren bearbeitet.

Eine in beiden Teilsystemen 1 und 2 vorhandene Task-Switch-Hook-Funktion H₁ und H₂ ist dabei die Stelle im Betriebssystem, in der eine Task T_{N} neu gestartet und mit neuer Information versorgt wird. Von außen zugeführte externe einkanalige Daten D₁ und D₂ werden, wenn sie nur einkanalig bei einem Teilsystem auftreten, von einer Interruptservice-Routine (ISR) dupliziert und dem anderen Teilsystem 2 zugeführt, um dort in dem Ereignisspeicher S₂ abgespeichert zu werden. Zweikanalig auftretende externe Daten D₃ und D₄ werden beiden Teilsystemen 1 und 2 gleichzeitig zugeführt und in den Ereignisspeichern S₁ und S₂ abgespeichert, so dass beim nächsten Taskwechsel die vom Anwender geschriebene Funktion aufgerufen wird und die auf beiden Teilsystemen vorhandenen Ereignisdaten synchron in die Teilsysteme einbringt. Dadurch wird erreicht, dass bei Ausfall eines Teilsystems, da beide Teilsysteme mit den gleichen Daten versorgt sind, der Prozess ohne Unterbrechung weiterlaufen kann, da dann das andere, nicht ausgefallene Teilsystem den Prozess weiter steuert.

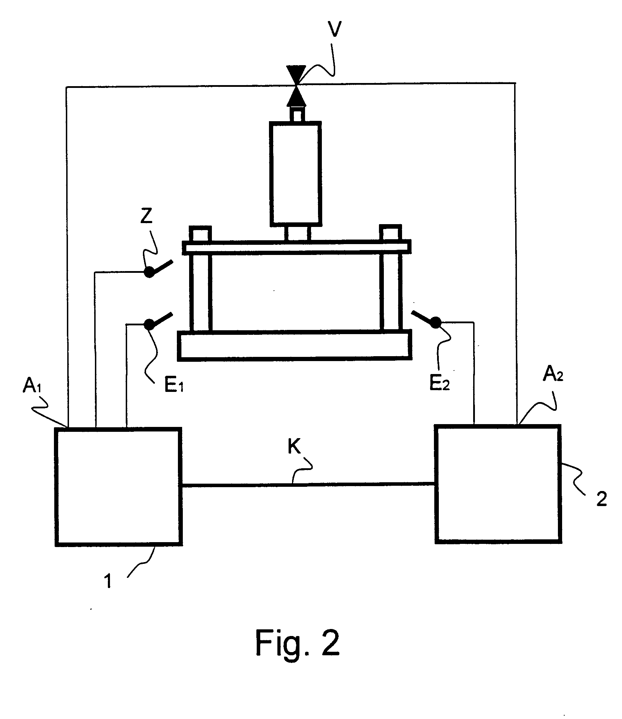

In Figur 2 ist ein hochverfügbares Automatisierungssystem zur Steuerung einer Presse dargestellt. Die beiden Teilsysteme sind hier als Masterteilsystem 1 und Slaveteilsystem 2 dargestellt. Über die wenigstens eine Kommunikationsleitung K werden Informationen und Daten ausgetauscht. Über den Ausgang A1 und A2 wird ein Ventil V zur Betätigung der Presse gesteuert. Die beiden Endschalter E1 und E2 liefern externe zweikanalige Ereignisdaten die beiden Teilsystemen 1 und 2 zugeführt werden. Ein Zählkontakt Z liefert dem Teilsystem 1 einen Zählwert. Dieses ist ein einkanaliges externes Ereignis. Auch die Ansteuerung des Ventils V ist zweikanalig. Beim Ausfalls des Masterteilsystems 1 übernimmt das Slaveteilsystem 2 die Steuerung des Ventils, so dass ein ununterbrochener Betrieb realisierbar ist. In diesem einkanaligen Betrieb steuert dann das Slaveteilsystem 2 die Presse. Dem Slaveteilsystem 2 wird kein Zählwert Z zugeführt, beim Ausfall des Masterteilsystem 1 wird jedoch der momentane Zählwert Z dem Slaveteilsystem 2 übergeben.

## Patentansprüche

1. Synchronisationsverfahren für ein redundant aus mindestens zwei Teilsystemen (1, 2) aufgebautes Automatisierungssystem, bei dem die mindestens zwei Teilsysteme jeweils mindestens einen Prozessor (P₁,P₂) und mindestens je einen Ereignisspeicher (S₁,S₂) enthalten, die mindestens zwei Teilsysteme über Kommunikationsleitungen (K₁,K₂) miteinander gekoppelt sind und zur Steuerung eines Prozesses in beiden Teilsystemen gleiche Tasks (T_{N}) ausgeführt werden,
**dadurch gekennzeichnet, dass**
bei einem Taskwechsel in wenigstens einem Teilsystem und dem Vorliegen von externen Ereignisdaten (D₁-D₄) in den Ereignisspeichern, die Ereignisdaten synchronisiert in jedes Teilsystem eingebracht werden.

2. Verfahren nach Anspruch 1,
**dadurch gekennzeichnet, dass**
bei einem Taskwechsel wenigstens eine Funktion in den Teilsystemen aufgerufen wird, die bei Vorliegen von externen Ereignisdaten in den Ereignisspeichern diese Ereignisdaten synchron in die beide Teilsysteme einbringt.

3. Verfahren nach den Ansprüchen 1 und 2,
**dadurch gekennzeichnet, dass**
externe Ereignisdaten (D₁, D₂), die nur bei einem Teilsystem auftreten, dupliziert werden, bevor sie den Teilsystemen zugeführt werden.

4. Verfahren nach Anspruch 3,
**dadurch gekennzeichnet, dass**
einkanalig auftretende externe Ereignisdaten nach einer Duplizierung in den Ereignisspeicher der Teilsysteme synchron abgespeichert werden.

5. Automatisierungssystem, das redundant aufgebaut ist, mit
- wenigstens zwei Teilsystemen (1,2) zur Steuerung eines Prozesses,
- bei der die Teilsysteme wenigstens jeweils
- einen Prozessor (P₁, P₂) zur Bearbeitung von Tasks (T_{N}) und
- einen Ereignisspeicher (S₁, S₂) zur Speicherung von externen Ereignisdaten aufweisen,
**dadurch gekennzeichnet, dass**
eine Taskumschalteinheit (H₁, H₂) vorgesehen ist, bei jedem Taskwechsel eine Funktion in den Taskablauf einzufügen, wenn an den Teilsystemen externe Ereignisdaten (D₁-D₄) vorliegen, die eine synchrone Abarbeitung erfordern und
eine Dupliziereinheit (ISR) vorgesehen ist, externe Ereignisdaten (D₁, D₂), die nur bei einem Teilsystem auftreten, zu duplizieren und dem wenigstens zweiten Teilsystem zuzuführen.
